Europäisches Patentamt

European Patent Office

Office européen des brevets

(11) Publication number: **0 681 002 A2**

# EUROPEAN PATENT APPLICATION

(21) Application number: **95302538.4**

(22) Date of filing: **18.04.95**

(51) Int. Cl.⁶: **C08L 69/00**, C08L 51/04,
//(C08L69/00,51:04),(C08L51/04,
69:00)

(30) Priority: **03.05.94 US 237544**

(43) Date of publication of application:
**08.11.95 Bulletin 95/45**

(84) Designated Contracting States:
**DE ES FR GB IT NL**

(71) Applicant: **GENERAL ELECTRIC COMPANY**
**1 River Road**
**Schenectady, NY 12345 (US)**

(72) Inventor: **Vilasagar, Shripathy**
**109 Wedgewood Drive**
**Parkersburg,**
**West Virginia 26101 (US)**

(74) Representative: **Szary, Anne Catherine et al**
**London Patent Operation,**
**GE Technical Services Co. Inc.,**
**Essex House,**
**12-13 Essex Street**
**London WC2R 3AA (GB)**

(54) Low gloss blends of polycarbonate and graft polymer.

(57) Thermoplastic blends comprise polycarbonate and a graft polymer. The graft polymer comprises a rubber substrate and a grafted portion, wherein the grafted portion is formed from at least one functionalized acrylate or methacrylate, at least one monovinyl aromatic monomer and at least one additional monomer.

EP 0 681 002 A2

## FIELD OF THE INVENTION

The present invention relates to thermoplastic blend compositions of polycarbonate and a graft polymer such as an ABS resin. More particularly, the present invention relates to low gloss blend compositions wherein the graft polymer contains a functionalized acrylate or methacrylate in the graft portion.

## BACKGROUND OF THE INVENTION

Polymer blend compositions for use in engineering applications should exhibit a combination of desirable physical properties such as heat resistance, good impact strength and good modulus. Additionally, the blend compositions should exhibit good melt flow properties which facilitate processing and molding of the blend compositions. Polycarbonates are popular blend components owing to their toughness and relatively high softening temperatures. However, owing to their relatively poor melt flow characteristics, polycarbonates are often blended with one or more additional polymers to improve their melt flow properties. Examples of such blend compositions include the Grabowski U. S. Patent No. 3,130,177 which discloses blends of polycarbonates with polybutadiene, styrene, acrylonitrile graft polymers and the Grabowski U. S. Patent No. 3,162,695 which discloses blends of polycarbonates with butadien-styrene, methyl methacrylate, styrene graft copolymers. The Parsons U.S. Patent No. 4,886,855 discloses blends of polycarbonate, ABS resin and styrene polymers which exhibit a good combination of physical properties.

When blend compositions of polycarbonate and ABS are used in various applications, it is desirable that the compositions exhibit low gloss properties. One method for reducing the gloss of such compositions comprises controlling the particle size of the ABS resin. However, this method may simultaneously disadvantageously affect other physical properties of the compositions. The Boutni U.S. Patent No. 4,902,743 discloses blends containing a polycarbonate, an ABS resin and a gloss-reducing amount of a glycidyl methacrylate copolymer. The Lindner et al U.S. Patents Nos. 4,596,851 and 4,742,104 disclose additional thermoplastic compositions containing a polycarbonate, a graft polymer such as an ABS resin and a rubber-free copolymer containing a copolymerized epoxide compound such as glycidyl methacrylate.

Low gloss blend compositions which do not contain ABS resins are also known. For example, the Gallucci et al U. S. Patent No. 4,885,335 discloses low gloss thermoplastic blends of a polycarbonate, acrylate-styrene-acrylonitrile interpolymers and glycidyl methacrylate polymers. The Boutni U. S. Patent No. 4,868,244 discloses low gloss compositions comprising a polycarbonate, an elastomeric block copolymer, a core- shell acrylic polymer and a glycidyl methacrylate polymer.

However, a need exists for improved compositions of polycarbonate and a graft polymer which exhibit a low surface gloss, together with good strength and processability. A need also exists for improved polycarbonate and graft rubber compositions with improved versitility and which achieves a low surface gloss from a functional group in the graft rubber phase as opposed to a separate, additional rigid phase.

## SUMMARY OF THE INVENTION

Accordingly, it is an object of the present invention to provide polymer blend compositions comprising a polycarbonate polymer and a graft polymer, which compositions exhibit a good combination of physical properties. It is a further object of the invention to provide polymer blend compositions of polycarbonate polymer and a graft polymer which exhibit low gloss and which therefore are advantageous for use in various applications. It is also an object of the present invention to provide blend compositions of polycarbonate and a graft polymer which exhibit good compatibility between these components.

These and additional objects are provided by the thermoplastic blend compositions of the present invention. The present compositions comprise a polycarbonate and a graft polymer comprising a rubber substrate and a grafted portion. In accordance with an important feature, the grafted portion is formed from (i) at least one monovinyl aromatic monomer, (ii) at least one monomer selected from the group consisting of acrylonitrile, methacrylonitrile, alkyl acrylates, alkyl (meth)acrylates, maleimides and mixtures thereof, and (iii) at least one functionalized acrylate or methacrylate monomer. It has been discovered that the inclusion of the functionalized acrylate or methacrylate in the grafted portion of the graft polymer reduces the surface gloss of the blend compositions. It also appears that the graft polymer containing the functionalized acrylate or methacrylate in the grafted portion aids in the compatibility of the polycarbonate and the graft polymer. Additionally, the graft polymer containing the functionalized acrylate or methacrylate in the grafted portion avoids disadvantageous increases in the melt viscosity of the present compositions, and in some cases may further reduce the melt viscosity of the compositions.

These and additional objects and advantages will be more fully apparent in view of the following detailed description.

## DETAILED DESCRIPTION

The thermoplastic blend compositions according to the invention comprise a polycarbonate and a graft polymer, and exhibit an advantageous combination of physical properties, including a reduced surface gloss. Thus, these compositions are suitable for use in a variety of applications.

The polycarbonate component included in the blend compositions may be any aliphatic or aromatic homo- polycarbonate or co-polycarbonate known in the art The polycarbonate component may be prepared in accordance with any of the processes generally known in the art, for example, by the interfacial polycondensation process, by polycondensation in a homogeneous phase or by transesterification. These processes and the associated reactants, catalysts, solvents and conditions are well known in the art and are described in U. S. Patents Nos. 2,964,974; 2,970,137; 2,999,835; 2,999,846; 3,028,365; 3,153,008; 3,187,065; 3,215,668; and 3,258,414, all of which are incorporated herein by reference. Suitable polycarbonates are based, for example, on one or more of the following bisphenols: dihydroxy diphenyls, bis-(hydroxyphenyl)-alkanes, bis-(hydroxyphenyl)-cycloalkanes, bis-(hydroxyphenyl)-sulfides, bis- (hydroxyphenyl)-ethers, bis-(hydroxyphenyl)-ketones, bis-(hydroxyphenyl)-sulphoxides, bis-(hydroxyphenyl)- sulphones, $\alpha,\alpha$-bis-(hydroxyphenyl)-diisopropyl benzenes, and their nucleus-alkylated and nucleus- halogenated derivatives, and mixtures thereof.

Specific examples of these bisphenols are 4,4'- dihydroxy diphenyl, 2,2-bis-(4-hydroxyphenyl)-propane, 2,4-bis-(4-hydroxyphenyl)-2-methyl butane, 1,1-bis-(4- hydroxyphenyl)-cyclohexane, $\alpha,\alpha$-bis-(4-hydroxyphenyl)-p-diisopropyl benzene, 2,2-bis(3-methyl-4-hydroxyphenyl)-propane, 2,2-bis-(3-chloro-4- hydroxyphenyl)-propane, bis-(3,5-dimethyl-4- hydroxyphenyl)-methane, 2,2-bis-(3,5-dimethyl-4-hydroxyphenyl)-propane, bis-(3,5-dimethyl-4- hydroxyphenyl)-sulphone, 2,4-bis-(3,5-dimethyl-4- hydroxyphenyl)-2-methyl butane, 1,1,-bis-(3,5-dimethyl- 4-hydroxyphenyl)-cyclohexane, $\alpha,\alpha$-bis-(3,5-dimethyl-4-hydroxyphenyl)-p-diisopropyl benzene, 2,2-bis-(3,5- dichloro-4-hydroxyphenyl)-propane and 2,2-bis(3,5- dibromo-4-hydroxyphenyl)-propane. A particularly preferred bisphenol is 2,2-bis-(4-hydroxyphenyl)-propane, more commonly known as bisphenol A.

Also suitable for use in the compositions of the present invention are copolyester-polycarbonate resins which include, in addition to recurring polycarbonate chain units, recurring ester chain units. Such resins are disclosed in U. S. Patents Nos. 3,169,121 and 4,487,896.

The graft polymer which is included in the thermoplastic blend compositions of the invention comprises a rubber substrate and a grafted portion, wherein the grafted portion contains a functionalized acrylate or methacrylate. It has been discovered that the inclusion of the functionalized acrylate or methacrylate in the grafted portion provides the blend compositions with a reduced surface gloss.

Examples of suitable rubbers for use as the rubber substrate in the graft polymer include, but are not limited to, polybutadiene, polybutadiene copolymers, for example, butadiene-styrene copolymers, butadiene- acrylonitrile copolymers and copolymers of butadiene with a lower alkyl ester of acrylic and/or methacrylic acid, polyisoprene, polychloroprene, alkyl acrylate rubbers, mixtures thereof and the like. In preferred embodiments, the graft polymer rubber substrate comprises polybutadiene or a butadiene copolymer with styrene and/or acrylonitrile, containing up to about 30 percent by weight of non-butadiene monomer.

In a preferred embodiment, the graft polymer contains at least 25 weight percent, and more preferably at least 40 weight percent, of the rubber substrate.

The grafted portion of the graft polymer is formed from a functionalized acrylate or methacrylate and at least two additional co-monomers. The first of the additional co-monomers is a monovinyl aromatic monomer, such as styrene or a substituted styrene. Substituted styrenes may contain one or more substituents on the aromatic portion and/or the vinyl portion of the styrene. Suitable substituents include, but are not limited to, alkyl groups of from one to about 5 carbon atoms and halogen atoms. In a preferred embodiment, the monovinyl aromatic monomer is selected from the group consisting of styrene, $\alpha$-methyl styrene and halogen-substituted styrenes.

The second additional monomer which is used in forming the graft portion is selected from the group consisting of acrylonitrile, methacrylonitrile, alkyl acrylates, alkyl methacrylates, maleimides, and mixtures thereof. The alkyl substituents of the acrylates and methacrylates preferably contain from one to about 4 carbon atoms. The maleimides may be N-substituted, with a preferred maleimide comprising N-phenylmaleimide. In a preferred embodiment, this second additional monomer is selected from the group consisting of acrylonitrile, methacrylonitrile and methyl methacrylate, with acrylonitrile being particularly preferred.

Preferred examples of the functionalized acrylate or methacrylate monomer which is used in forming the grafted portion of the graft copolymer include, but are not limited to, unsaturated epoxide compounds such as glycidyl acrylate and glycidyl methacrylate; aziridine compounds such as 2-(1-aziridinyl)ethyl methacrylate and 2-(1-aziridinyl)ethyl acrylate; mono or diglycidyl itaconate, crotonate, maleate, fumarate; allyl glycidyl ether; and vinyl benzyl glycidyl ether. Other polymerizable epoxide and aziridine compounds may also be employed, as well as other functionalized acrylate and/or methacrylate compounds, or mixtures thereof. Preferred functionalized monomers for use in forming the graft portion in accordance with the present invention include glycidyl methacrylate and 2-(1-aziridinyl)ethyl methacrylate.

The amounts of the functionalized acrylate or methacrylate and the two additional monomers used in preparing the grafted portion of the graft polymer may be varied depending on the specific desired properties of the blend compositions. Preferably, the grafted portion comprises functionalized acrylate or methacrylate in an amount sufficient to reduce the gloss of the compositions. Additionally, it is preferred that the monovinyl aromatic monomer is included in an amount equal to or greater than the monomer selected from the group consisting of acrylonitrile, methacrylonitrile, alkyl acrylates, alkyl (meth)acrylates, maleimides and mixtures thereof. Suitably, the grafted portion comprises from about 50 to about 90 weight percent, and more preferably from about 50 to about 85 weight percent, of the monovinyl aromatic monomer, from about 5 to about 50 weight percent and more preferably from about 5 to about 30 weight percent, of at least one monomer selected from the group consisting of acrylonitrile, methacrylonitrile, alkyl acrylates, alkyl (meth)acrylates, maleimides and mixtures thereof, and from about 0.1 to about 15 weight percent, and more preferably from about 1 to about 10 weight percent, functionalized acrylate or methacrylate.

The graft polymer may be formed in accordance with polymerization techniques known in the art for use in preparing ABS type resins. Suitably, emulsion, solution, bulk or suspension polymerization may be employed.

Additionally, the graft polymer may contain a free rigid polymer formed from the grafting monomers. Free rigid polymers are often formed during production of the graft polymer, in accordance with techniques well known in the art.

The thermoplastic blend compositions of the invention may contain varying amounts of polycarbonate and graft polymer, depending on the desired properties of the composition and the intended application of the composition. Suitably, the compositions comprise from about 5 to about 95 weight percent of polycarbonate and from about 5 to 95 weight percent of graft polymer. Preferably, the compositions comprise from about 30 to about 90 weight percent of the polycarbonate and from about 10 to about 70 weight percent of the graft polymer, based on the weight of the graft polymer and the polycarbonate.

In one embodiment, the compositions of the invention may further include a second graft polymer comprising a rubber substrate and a grafted portion, wherein the grafted portion does not contain a functionalized acrylate or methacrylate. This second graft polymer may be formed from the rubbers and the grafting monomers described above for use in preparing the first graft polymer, with the exception of the functionalized acrylate or methacrylate. If a functionalized acrylate or methacrylate-free graft polymer is included in the blend compositions of the present invention, it is included in an amount of up to about 50 weight percent, based on the polycarbonate, the functionalized acrylate or methacrylate-containing graft polymer and the functionalized acrylate or methacrylate-free graft polymer.

In a further embodiment, the thermoplastic blend compositions of the invention may further include at least one additional rubber-free copolymer. The rubber-free copolymer is suitably formed from two or more of the monomers described above for use in forming the graft portion of the graft polymer. In a preferred embodiment, the thermoplastic blend compositions contain at least one rubber-free copolymer formed from at least one monovinyl aromatic monomer and at least one monomer selected from the group consisting of acrylonitrile, methacrylonitrile, alkyl acrylates, alkyl (meth)acrylates, maleimides and mixtures thereof. In such rubber-free copolymers, it is preferred that the monovinyl aromatic monomer is included in an amount of from about 50 to about 95 weight percent and the additional monomer is included in an amount of from about 5 to about 50 weight percent. Preferably, the rubber-free copolymers are included in the blend composition in an amount not greater than about 50 weight percent, based on the polycarbonate, the graft polymer and the rubber-free copolymer.

The blend compositions of the invention may be produced according to conventional methods employing conventional mixing and compounding apparatus including, for example, single and twin-screw extruders, mixing rolls and internal mixers. The blend compositions may also include various conventional additives including, among others, stabilizers, lubricants, flow aids, mold release agents, antioxidants, anti-static agents, fire and flame retardants, fillers, glass fibers, pigments and the like. Suitable additives may

4

also include an anti-drip agent, for example, polytetrafluoroethylene, and/or synergistic salts, for example, potassium diphenylsulfone sulfonate (KSS), STB and the like.

The following examples demonstrate blend compositions according to the present invention. In the examples and throughout the present specification, parts and percentages are by weight, unless otherwise specified. Additionally, in the examples, the following abbreviations are used for the components employed in the blend compositions:

PC-1, PC-2 and PC-3: aromatic polycarbonates sold by General Electric Company under the trademark Lexan®.

SAN: a styrene-acrylonitrile copolymer having a styrene to acrylonitrile weight ratio of approximately 3:1.

ABS: a high rubber graft copolymer comprising a polybutadiene substrate and a grafted portion formed from styrene and acrylonitrile in an approximate weight ratio of 3:1.

ABS-GMA-1: a graft copolymer similar to ABS described above, except that the grafted portion contains 3 PHR glycidyl methacrylate. The glycidyl methacrylate was added to the grafting reaction at a period varying from 20 to 60 minutes from reaction completion, as described in the examples.

ABS-GMA-2: a graft polymer similar to ABS-GMA-1 except that 2 PHR glycidyl methacrylate monomer is contained in the grafted portion.

ABS-GMA-3: a graft polymer similar to ABS-GMA-2 except that the weight ratio of styrene to acrylonitrile in the grafted portion is 85:15.

ABS-AEM: a graft copolymer similar to ABS described above, except that the grafted portion contains 3 PHR 2-(1-aziridinyl)ethyl methacrylate.

QUANTUM® 3008: a stabilizer.

IRGANOX® 3114: an anti-oxidant supplied by Ciba Geigy Corporation.

GLYCOLUBE P®: a lubricant supplied by Glyco, Inc.

## EXAMPLE 1

In this example, blend compositions according to the present invention containing a polycarbonate, a glycidyl methacrylate-containing graft polymer, a styrene-acrylonitrile copolymer and a functionalized acrylate or methacrylate-free graft polymer were prepared. The parts by weight of each component included in the compositions of this example are set forth in Table I. The compositions of these examples were compounded at 550°F and 200 rpm on a 34 mm Leistritz 10R twin screw extruder. The resulting dried blends were then injection molded at 550°F with a 150°F mold temperature. Samples of these compositions were subjected to measurement of their Gardner Gloss (60°), Izod Impact Strength according to ASTM-D 256 and melt viscosity according to ASTM-D 638. The results of these measurements are also set forth in Table I.

Table 1

| Component (pbw) | 1 | 2 | 3 | 4 | 5 | 6 | 7 | 8 |
|---|---|---|---|---|---|---|---|---|
| PC-1 | 64.0 | 64.0 | 64.0 | 64.0 | 64.0 | 64.0 | 64.0 | 64.0 |
| SAN | 20.0 | 20.0 | 20.0 | 20.0 | 20.0 | 20.0 | 20.0 | 20.0 |
| ABS | 16.0 | 8.0 | 8.0 | 8.0 | 8.0 | 6.0 | 3.0 | ---- |
| ABS-GMA-1 (20)* | ---- | 8.0 | ---- | ---- | ---- | 10.0 | 13.0 | 16.0 |
| ABS-GMA-1 (30)* | ---- | ---- | 8.0 | ---- | ---- | ---- | ---- | ---- |
| ABS-GMA-1 (40)* | ---- | ---- | ---- | 8.0 | ---- | ---- | ---- | ---- |
| ABS-GMA-1 (60)* | ---- | ---- | ---- | ---- | 8.0 | ---- | ---- | ---- |
| QUANTUM® 3008 | 1.0 | 1.0 | 1.0 | 1.0 | 1.0 | 1.0 | 1.0 | 1.0 |
| IRGANOX® 3114 | 0.1 | 0.1 | 0.1 | 0.1 | 0.1 | 0.1 | 0.1 | 0.1 |
| IZOD IMPACT STRENGTH, (FT-LB/IN), 1/8", NOTCHED | | | | | | | | |
| Room Temperature | 13.9 | 13.7 | 13.4 | 13.8 | 13.8 | 12.7 | 12.2 | 11.3 |
| -20°F | 3.5 | 4.9 | 8.5 | 7.7 | 10.2 | 7.9 | 7.4 | 2.5 |
| -40°F | 3.5 | 3.6 | 3.9 | 3.6 | 3.2 | 3.6 | 3.0 | 2.4 |
| MELT VISCOSITY, (POISE) @550°F | | | | | | | | |
| 100 SEC$^{-1}$ | 4898 | 5839 | 7070 | 6405 | 6524 | 7012 | 6370 | 4180 |
| 500 SEC$^{-1}$ | 2251 | 2503 | 2999 | 2716 | 2807 | 2948 | 2797 | 2056 |
| 1000 SEC$^{-1}$ | 1610 | 1738 | 2073 | 1877 | 1952 | 230 | 1962 | 1515 |
| GARDNER GLOSS, 60° | 95 | 82 | 42 | 68 | 41 | 41 | 45 | 41 |

*THE NUMBER IN PARENTHESES INDICATES THE TOTAL TIME (IN MIN) FOR WHICH GMA WAS REACTED WITH THE REACTION MIXTURE, ALWAYS AT THE END OF THE REACTION

## EXAMPLE 2

In this example, additional compositions according to the present invention were prepared comprising polycarbonate, a glycidyl methacrylate-containing graft polymer, a styrene-acrylonitrile copolymer and a functionalized acrylate or methacrylate-free graft polymer. The parts by weight of the components included in the compositions of this example are set forth in Table II. These compositions were processed in a manner similar to that described in Example 1 and were subjected to measurements similar to those described in Example 1. The results of these measurements are also set forth in Table II.

## Table II

| Component (pbw) | 9 | 10 | 11 | 12 | 13 | 14 | 15 | 16 | 17 | 18 | 19 | 20 |
|---|---|---|---|---|---|---|---|---|---|---|---|---|
| PC-1` | 64.0 | 64.0 | 64.0 | 64.0 | 64.0 | 64.0 | 64.0 | 64.0 | 64.0 | 64.0 | 64.0 | 64.0 |
| SAN | 20.0 | 20.0 | 20.0 | 20.0 | 20.0 | 20.0 | 20.0 | 20.0 | 20.0 | 20.0 | 20.0 | 20.0 |
| ABS | 16.0 | — | — | — | — | 3.0 | 6.0 | — | 3.0 | 6.0 | 3.0 | 6.0 |
| ABS-GMA-2 (20)* | — | 16.0 | — | — | — | — | — | — | — | — | 13.0 | 10.0 |
| ABS-GMA-2 (30)* | — | — | 16.0 | — | — | — | — | — | — | — | — | — |
| ABS-GMA-2 (40)* | — | — | — | 16.0 | — | — | — | — | — | — | — | — |
| ABS-GMA-2 (60)* | — | — | — | — | 16.0 | 13.0 | 10.0 | — | — | — | — | — |
| ABS-GMA-3 (60)* | — | — | — | — | — | — | — | 16.0 | 13.0 | 10.0 | — | — |
| QUANTUM®3008 | 1.0 | 1.0 | 1.0 | 1.0 | 1.0 | 1.0 | 1.0 | 1.0 | 1.0 | 1.0 | 1.0 | 1.0 |
| IRGANOX®3114 | 0.1 | 0.1 | 0.1 | 0.1 | 0.1 | 0.1 | 0.1 | 0.1 | 0.1 | 0.1 | 0.1 | 0.1 |

**IZOD IMPACT STRENGTH, (FT-LB/IN), 1/8", NOTCHED**

| | | | | | | | | | | | | |
|---|---|---|---|---|---|---|---|---|---|---|---|---|
| Room Temperature | 11.9 | 12.2 | 11.2 | 11.0 | 12.2 | 12.9 | 11.9 | 10.3 | 11.1 | 11.0 | 11.4 | 11.2 |
| -20°F | 8.4 | 3.8 | 2.5 | 3.0 | 4.5 | 9.5 | 6.4 | 3.7 | 4.2 | 4.4 | 4.4 | 5.8 |
| -40°F | 4.1 | 2.2 | 1.9 | 2.0 | 2.2 | 3.8 | 3.4 | 2.6 | 2.7 | 3.4 | 3.7 | 4.0 |

**MELT VISCOSITY (POISE) @550°F**

| | | | | | | | | | | | | |
|---|---|---|---|---|---|---|---|---|---|---|---|---|
| $100\ SEC^{-1}$ | 5447 | 6294 | 3167 | 4744 | 6501 | 7464 | 8375 | 8987 | 6761 | 6918 | 7069 | 5168 |
| $500\ SEC^{-1}$ | 2405 | 2887 | 1888 | 2114 | 3283 | 3187 | 3494 | 3695 | 2853 | 2883 | 2813 | 2417 |
| $1000\ SEC^{-1}$ | 1691 | 2064 | 1511 | 1492 | 2447 | 2209 | 2398 | 2520 | 1968 | 1977 | 1891 | 1742 |

| GARDNER GLOSS, 60° | 77 | 29 | 26 | 24 | 22 | 22 | 23 | 21 | 21 | 26 | 29 | 52 |
|---|---|---|---|---|---|---|---|---|---|---|---|---|

* THE NUMBER IN PARENTHESES INDICATES THE TOTAL TIME (IN MIN) FOR WHICH GMA WAS REACTED WITH THE REACTION MIXTURE, ALWAYS AT THE END OF THE REACTION.

The results set forth in Tables I and II demonstrate that the compositions according to the present invention exhibit reduced surface gloss. The compositions also exhibit a good combination of Izod impact strength and relatively low melt viscosity. TEM pictures of these compositions according to the invention also indicate that the compositions containing the graft polymer including glycidyl methacrylate in the grafted portion exhibited a more dispersed morphology, indicating improved compatibility between the polycarbonate and graft rubber phases in contrast to Sample 9 which showed large lamellae domains of polycarbonate and graft rubber phases.

### EXAMPLE 3

In this example, an additional composition according to the present invention was prepared comprising polycarbonate, a graft polymer containing 2- (1-aziridinyl)ethyl methacrylate in the graft portion, a styrene-acrylonitrile copolymer and a functionalized acrylate or methacrylate-free graft polymer. A comparative composition which did not contain the graft polymer including 2-(1-aziridinyl)ethyl methacrylate was also prepared. The parts by weight of the components included in the compositions of this example are set forth in Table III. These compositions were processed in a manner similar to that described in Example 1 and were subjected to measurements similar to those described in Example 1. The results of these measurements are also set forth in Table III.

TABLE III

| Component (pbw) | 21 | 22 |
|---|---|---|
| PC-2 | 64.0 | 64.0 |
| SAN | 20.0 | 20.0 |
| ABS | 16.0 | 4.0 |
| ABS-AEM | ---- | 12.0 |
| IRGANOX®3114 | 0.1 | 0.1 |
| GLYCOLUBE P® | 1.0 | 1.0 |
| IZOD IMPACT STRENGTH, (FT-LB/IN), 1/8", NOTCHED, ROOM TEMPERATURE | 14.5 | 9.3 |
| MELT VISCOSITY (POISE) @ 550°F | | |
| 100 SEC$^{-1}$ | 5352 | 4285 |
| 500 SEC$^{-1}$ | 2500 | 2066 |
| 1000 SEC$^{-1}$ | 1801 | 1509 |
| GARDNER GLOSS, 60° | 92 | 23 |

The results set forth in Table III demonstrate that Composition 22 according to the present invention exhibited significantly reduced gloss as compared with Composition 21 including a conventional ABS graft copolymer. Additionally, the composition according to the present invention exhibited reduced melt viscosity as compared with the conventional composition, thereby indicating that the compositions according to the present invention are easily processed.

## EXAMPLE 4

In this example, additional compositions according to the present invention were prepared comprising polycarbonate, a graft polymer containing 2-(1-aziridinyl)ethyl methacrylate in the graft portion, a styrene-acrylonitrile copolymer and a functionalized acrylate or methacrylate-free graft polymer. A comparative composition which did not contain the graft copolymer including 2-(1-aziridinyl)ethyl methacrylate in the graft portion was also prepared. The parts by weight of the components included in the compositions of this example are set forth in Table IV. These compositions were processed in a manner similar to that described in Example 1 and were subjected to measurements similar to those described in Example 1. The results of these measurements are also set forth in Table IV.

TABLE IV

| Component (pbw) | 23 | 24 | 25 | 26 |
|---|---|---|---|---|
| PC-3 | 64.0 | 64.0 | 64.0 | 64.0 |
| SAN | 20.0 | 20.0 | 20.0 | 20.0 |
| ABS | 16.0 | 10.0 | 7.0 | ---- |
| ABS-AEM | ---- | 6.0 | 9.0 | 16.0 |
| IRGANOX®3114 | 0.1 | 0.1 | 0.1 | 0.1 |
| GLYCOLUBE P® | 1.0 | 1.0 | 1.0 | 1.0 |
| IZOD IMPACT STRENGTH, (FT-LB/IN), 1/8", NOTCHED, ROOM TEMPERATURE | 13.6 | 11.4 | 12.9 | 2.6 |
| MELT VISCOSITY (POISE) @ 550°F | | | | |
| 100SEC$^{-1}$ | 5460 | 3430 | 2680 | 2450 |
| 500SEC$^{-1}$ | 2660 | 2120 | 1940 | 1800 |
| 1000SEC$^{-1}$ | 1760 | 1560 | 1540 | 1440 |
| GARDNER GLOSS, 60° | 85 | 84 | 32 | 20 |

The results set forth in Table IV demonstrate that low gloss compositions according to the present invention may be prepared having good impact strength and reduced melt viscosity, whereby the compositions may be easily processed in a variety of applications.

The preceding examples are set forth to illustrate specific embodiments of the invention and are not intended to limit the scope of the compositions of the present invention. Additional embodiments and advantages within the scope of the claimed invention will be apparent to one of ordinary skill in the art.

**Claims**

1. A thermoplastic blend composition, comprising a polycarbonate and a graft polymer, the graft polymer comprising a rubber substrate and a grafted portion, the grafted portion being formed from at least one monovinyl aromatic monomer, at least one monomer selected from the group consisting of acrylonitrile, methacrylonitrile, alkyl acrylates, alkyl methacrylates, maleimides and mixtures thereof, and at least one functionalized acrylate or methacrylate monomer.

2. The thermoplastic blend composition as defined by claim 1, comprising from about 5 to about 95 weight percent of the polycarbonate and from about 5 to about 95 weight percent of the graft polymer.

3. The thermoplastic blend composition as defined by claim 1, comprising from about 30 to about 90 weight percent of the polycarbonate and from about 10 to about 70 weight percent of the graft polymer.

4. The thermoplastic blend composition as defined by claim 1, wherein the polycarbonate is an aromatic polycarbonate.

5. The thermoplastic blend composition as defined by claim 4, wherein the polycarbonate is formed from 2,2-bis-(4-hydroxyphenyl)-propane.

6. The thermoplastic blend composition as defined by claim 1, wherein the polycarbonate comprises a copolyester-polycarbonate.

7. The thermoplastic blend composition as defined by claim 1, wherein said graft polymer rubber substrate comprises at least one rubber selected from the group consisting of polybutadiene, butadiene-styrene copolymers, alkyl acrylate rubbers, polyisoprene, and polychloroprene.

8. The thermoplastic blend composition as defined by claim 7, wherein said rubber substrate comprises polybutadiene.

9. The thermoplastic blend composition as defined by claim 1, wherein said grafted portion is formed from at least one monovinyl aromatic monomer selected from the group consisting of styrene, alpha-methylstyrene, and halogen-substituted styrenes.

10. The thermoplastic blend composition as defined by claim 1, wherein said grafted portion is formed from at least one monomer selected from the group consisting of acrylonitrile, methacrylonitrile and methyl methacrylate.

11. The thermoplastic blend composition as defined by claim 1, wherein said functionalized acrylate or methacrylate monomer comprises epoxide-containing acrylates and methacrylates, and aziridine-containing acrylates and methacrylates, or mixtures thereof.

12. The thermoplastic blend composition as defined by claim 11, wherein said functionalized acrylate or methacrylate comprises glycidyl methacrylate.

13. The thermoplastic blend compositions as defined by claim 11, wherein said functionalized acrylate or methacrylate comprises 2-(1-aziridinyl)ethyl methacrylate.

14. The thermoplastic blend composition as defined by claim 1, wherein said grafted portion is formed from at least one monomer selected from styrene, alpha- methylstyrene and halogen-substituted styrenes, at least one monomer selected from acrylonitrile, methacrylonitrile and methyl methacrylate, and glycidyl methacrylate.

**15.** The thermoplastic blend composition as defined by claim 1, wherein said grafted portion is formed from at least one monomer selected from styrene, alpha- methylstyrene and halogen-substituted styrenes, at least one monomer selected from acrylonitrile, methacrylonitrile and methyl methacrylate, and 2-(1-aziridinyl)ethyl methacrylate.

**16.** The thermoplastic blend composition as defined by claim 1, wherein said grafted portion comprises the functionalized acrylate or methacrylate in an amount sufficient to reduce the gloss of the composition.

**17.** The thermoplastic blend composition as defined by claim 1, wherein said grafted portion comprises from about 5 to about 95 weight percent of the monovinyl aromatic monomer, from about 95 to about 5 weight percent of the at least one monomer selected from the group consisting of acrylonitrile, methacrylonitrile, alkyl acrylates, alkyl methacrylates, maleimides and mixtures thereof, and from about 0.1 to about 15 weight percent functionalized acrylate or methacrylate.

**18.** The thermoplastic blend composition as defined by claim 1, wherein said grafted portion comprises from about 50 to about 85 weight percent of the monovinyl aromatic monomer, from about 5 to about 30 weight percent of the at least one monomer selected from the group consisting of acrylonitrile, methacrylonitrile, alkyl acrylates, alkyl methacrylates, maleimides and mixtures thereof, and from about 1 to about 10 weight percent functionalized acrylate or methacrylate.

**19.** The thermoplastic blend composition as defined by claim 1, further including at least one rubber-free copolymer formed from at least one monovinyl aromatic monomer and at least one monomer selected from the group consisting of acrylonitrile, methacrylonitrile, alkyl acrylates, alkyl methacrylates, maleimides and mixtures thereof.

**20.** The thermoplastic blend composition as defined by claim 19, wherein said rubber-free copolymer comprises from about 50 to about 95 weight percent of the monovinyl aromatic monomer and from about 5 to about 50 weight percent of the monomer selected from the group consisting of acrylonitrile, methacrylonitrile, alkyl acrylates, alkyl methacrylates, and maleimides.

**21.** The thermoplastic blend composition as defined by claim 1, further comprising an additional graft copolymer which is free of functionalized acrylate or methacrylate in its grafted portion.

**22.** The thermoplastic blend composition as defined by claim 21, wherein said additional graft copolymer comprises a rubber substrate and a grafted portion formed from at least one monovinyl aromatic monomer and at least one monomer selected from the group consisting of acrylonitrile, methacrylonitrile, alkyl acrylates, alkyl methacrylates, maleimides and mixtures thereof.

**23.** A thermoplastic blend composition, consisting of a polycarbonate and a graft polymer, the graft polymer consisting of a rubber substrate and a grafted portion, the grafted portion being formed from at least one monovinyl aromatic monomer, at least one monomer selected from the group consisting of acrylonitrile, methacrylonitrile, alkyl acrylates, alkyl methacrylates, maleimides and mixtures thereof, and at least one functionalized acrylate or methacrylate monomer.

**24.** A method for reducing the gloss of a thermoplastic blend composition comprising a polycarbonate polymer and a graft polymer comprising a rubber substrate and a grafted portion grafted thereto, comprising the step of blending the polycarbonate with the graft polymer wherein the graft polymer comprises at least one epoxide or aziridine functionalized acrylate or methacrylate monomer.